(19) **Europäisches Patentamt**
**European Patent Office**
**Office européen des brevets**

(11) **EP 3 671 764 B1**

(12) **EUROPEAN PATENT SPECIFICATION**

(45) Date of publication and mention
of the grant of the patent:
**13.04.2022 Bulletin 2022/15**

(21) Application number: **19383076.7**

(22) Date of filing: **04.12.2019**

(51) International Patent Classification (IPC):
*H01B 3/56* (2006.01)     *H02B 13/035* (2006.01)
*H02B 13/055* (2006.01)

(52) Cooperative Patent Classification (CPC):
**H01B 3/56;** H02B 13/055

(54) **LOW ENVIRONMENTAL IMPACT ELECTRICAL INSULATION SYSTEM FOR MEDIUM AND HIGH VOLTAGE ELECTRICAL SWITCHGEAR**

ELEKTRISCHES ISOLIERUNGSSYSTEM MIT GERINGER UMWELTAUSWIRKUNG FÜR ELEKTRISCHE MITTEL- UND HOCHSPANNUNGSSCHALTGERÄTE

SYSTÈME D'ISOLATION ÉLECTRIQUE À FAIBLE IMPACT ENVIRONNEMENTAL POUR APPAREIL DE COMMUTATION ÉLECTRIQUE MOYENNE ET HAUTE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 ES 201831234**

(43) Date of publication of application:
**24.06.2020 Bulletin 2020/26**

(73) Proprietor: **Ormazabal Corporate Technology, A.I.E.**
**48340 Amorebieta-Etxano (Vizcaya) (ES)**

(72) Inventors:
• **LARRIETA ZUBIA, Javier**
  **48340 AMOREBIETA-ETXANO (BIZKAIA) (ES)**
• **IZCARA ZURRO, Jesús**
  **48340 AMOREBIETA-ETXANO (BIZKAIA) (ES)**

(74) Representative: **Herrero & Asociados, S.L.**
**Cedaceros, 1**
**28014 Madrid (ES)**

(56) References cited:
**WO-A1-2016/116637**     **US-A1- 2014 233 159**
**US-A1- 2015 214 701**     **US-A1- 2018 247 779**

**Description**

**FIELD OF THE INVENTION**

The present invention falls within the field of electrical insulation systems for use in medium and high voltage electrical switchgear. More particularly, the invention relates to an electrical insulation system comprising two fundamental elements:

a) a gas medium formed of a mixture of i) one or more highly fluorinated fluoroketones of 5 to 6 carbon atoms, ii) one or more non-flammable hydrofluoroolefins of 4 carbon atoms, and iii) one, two or three carrier gases selected from N2, O2, dry air, helium or mixtures thereof; and
b) a molecular sieve capable of preferentially adsorbing water molecules rather than molecules of the carrier gases present in the gaseous medium of the system.

Likewise, the invention relates to the use of the electrical insulation system, as well as to medium or high voltage electrical switchgear comprising a closed enclosure in which live electrical components are located and an electrical insulation system according to the invention.

**BACKGROUND OF THE INVENTION**

Electrical insulation in medium and high voltage equipment is normally ensured by the use of a dielectric gas that is introduced into a closed and sealed enclosure where the live components of electrical equipment are located.
The most commonly used dielectric gas in recent years is gas SF6 because of its excellent dielectric properties and, among many other advantages, because it is not toxic to people. However, this gas has a high environmental impact due to its high greenhouse effect potential (GWP = 22800).
For this reason, in recent years alternative gases that can replace this gas in this type of equipment are being sought. Different alternative gases to SF6 with good dielectric properties have been considered, but for one reason or another (unacceptable toxicity, high greenhouse effect potential, flammability, etc.) they have not been finally implemented.
Furthermore, the use of only more environmentally friendly gases such as dry air, N2, O2 or CO2 as a dielectric medium in this equipment would result in a considerable increase in the size of this equipment for a given voltage level, due to the lower dielectric strength of these gases compared to SF6. Another option in this case would be to increase the filling pressure of the equipment to values higher than those used with SF6 (around 1300 mbars), but this would imply making the design conditional on compliance with the various existing national regulations for containers with pressures greater than 1500 mbars with the consequent increase in the cost of the equipment.
A promising alternative is fluoroketones, not only because they have good dielectric strength but also because some of them are not toxic to humans and have a much lower environmental impact than SF6 gas. WO2010/1460022 or WO2010/142346 already de facto disclose the use of fluoroketones for electrical insulation in medium and high voltage apparatuses.
Other documents such as WO2012/160158 and WO2012/160155 disclose mixtures of fluoroketones with carrier gases such as CO2, N2, O2, air or mixtures thereof. There are also electrical insulation systems which disclose gas mixtures comprising hydrofluoroolefins of 3 carbon atoms like in US 2015/214701 A1, and gas mixtures comprising hydrofluoroolefins of 4 carbon atoms like in US 2018/247779 A1.
Another problem that negatively affects the dielectric capacity of gaseous insulation systems is the presence of water molecules from the materials used to manufacture some electrical components of the switchgear itself. Water may appear in the closed and sealed enclosure of the switchgear where the insulating gas is located because some thermoplastic materials used in the manufacture of electrical components such as, for example, polyamides may contain water in their interior. For example, in the case of polyamides they can have absorbed between 4.5 and 7.5% by weight of water.
The presence of water in the gaseous medium decreases the dielectric properties of the same, so its presence should be avoided. To solve the problem of water in electrical switchgears, desiccants and molecular sieves have been used. A molecular sieve is a material that contains small pores of a precise and uniform size, and is used as an adsorbent agent for gases and liquids. Molecules that are small enough to pass through the pores are adsorbed, while larger molecules are not. Unlike a filter, the process operates at a molecular level. For example, one water molecule may be small enough to pass, while other larger molecules may not.
In SF6 gas isolation systems as the only insulating gas, the separation of water is relatively simple by molecular sieves since the size of the SF6 molecule is substantially larger than that of the water molecule and, therefore, the selection by molecule sizes is not a major problem.

However, this problem is not so easy to solve in gaseous insulation systems in which molecules of comparable sizes to those of the water molecule exist, such as carrier gases such as N2, CO2, dry air together with insulators such as fluoroketones. In this type of dielectric insulations, gases acting as carriers (CO2, N2, air, O2 etc.) have molecular sizes similar to those of the water molecule, and sieves can adsorb part of these gases instead of the water molecules.

WO 2016/116637 by the authors of the present invention solved this problem by a gaseous medium formed by one or more fluoroketones, another additional dielectric gas, particularly fluoronitrile, and by one or more carrier gases and a molecular sieve of certain characteristics.

There is, however, a need to develop insulation systems for medium and high voltage electrical switchgear based on gases or gas mixtures that, in addition to exercising their main function of electrical insulation, allow providing improved safety, environmental impact or durability characteristics that increase the versatility of existing insulation systems and allow increasing the adaptability of insulation systems to as many working conditions as possible to which medium and high voltage systems or switchgear may be subjected.

An alternative is systems based on mixtures of fluoroketones and hydrofluoroolefins, both gases with high dielectric strength. WO2013/041695 discloses gaseous electrical isolation media based on mixtures composed of a hydrofluoroolefin of 3 carbon atoms, such as for example HFO-1234ze or HFO-1234yf, and a fluoroketone of 5 carbon atoms. The hydrofluorolefins of 3 carbon atoms HFO-1234ze or HFO-1234yf have, however, the problem that they may be flammable at certain concentrations and operating temperatures of the medium and high voltage electrical switchgear to which the insulation systems described herein are directed.

The authors of the present invention have developed an electrical insulation system for medium and high voltage switchgear based on a mixture of fluoroketones and hydrofluorolefins which maintains or even improves the dielectric strength of similar systems but reduces the risk of ignition compared to the gaseous mixture described in WO2013/041695 and further allows the dielectric insulation capacity not to be affected by the presence of water that may appear inside the closed enclosures of said electrical switchgear, where the electrical components insulated with the dielectric gases are located. In addition, the system of the present invention has excellent environmental characteristics and very low toxicity.

**OBJECT OF THE INVENTION**

It is therefore an object of the invention a low environmental impact electrical insulation system for medium or high voltage electrical switchgear that represents a solution to the problems raised above. More particularly, the main object of the present invention is an electrical insulation system for medium or high voltage electrical switchgear comprising:

a) a gaseous medium consisting of a mixture of:

i) one or more fluoroketones of between 5 and 6 carbon atoms;
ii) one or more non-flammable hydrofluoroolefins of 4 carbon atoms; and
iii) one, two or three carrier gases selected from N2, O2, dry air, helium or mixtures thereof;

b) a molecular sieve having a pore size of 3 to 6 Å and a polar surface.

Another object of the invention is the use of the electrical insulation system of the invention for electrical insulation and/or for the extinction of electric arcs in medium or high voltage electrical switchgear.

A further object of the invention is a method the electrical insulation and/or for the extinction of electric arcs in medium and high voltage electrical switchgear comprising introducing the electrical insulation system into a closed and sealed enclosure where the live electrical components of said medium or high voltage electrical switchgear are located.

A last object of the present invention is a medium or high voltage electrical switchgear comprising a closed enclosure containing live electrical components and an electrical insulation system according to the present invention.

**BRIEF DESCRIPTION OF THE FIGURES**

**Figure 1:** representation of the structure A of the zeolite.
**Figure 2:** representation of the location of the sodium cations in structure A of the zeolite.
**Figure 3:** BAUR DTA-100E equipment used to determine the dielectric strength of gaseous electrical insulation systems.

**DETAILED DESCRIPTION OF THE INVENTION**

A first main object of the present invention relates to an electrical insulation system for medium or high voltage electrical switchgear comprising:

  a) a gaseous medium consisting of a mixture of:

    i) one or more fluoroketones of between 5 and 6 carbon atoms;
    ii) one or more non-flammable hydrofluoroolefins of 4 carbon atoms; and
    iii) one, two or three carrier gases selected from N2, O2, dry air, helium or mixtures thereof;

  b) a molecular sieve having a pore size of 3 to 6 Å and a polar surface.

The first element of the electrical insulation system of the invention is the gaseous medium. Within this gaseous medium, one of the essential elements is fluoroketones of between 5 and 6 carbon atoms.

In a particular and preferred embodiment of the invention, fluoroketones have respectively the structural formulations CF3-CO-CF-(CF3)2 (referred to herein as C5K) and CF3-CF2-CO-CF-(CF3)2 (referred to herein as C6K). The reason why these two fluoroketones are especially preferred is because they are products with good dielectric strength, with very low greenhouse effect potential (global warming potential or GWP =1) and are also non-toxic. For example, for fluoroketone C5K the environmental limit value for daily exposure, ELV-DE (8 hours), is 225 ppmv.

The second essential element of the gaseous medium would be hydrofluorolefins of 4 carbon atoms. In particular, the preferred 4-carbon hydrofluoroolefins are cis-1,1,1,4,4,4-hexafluoro-2-butene (HFO-1336mzzZ) and trans-1,1,1,4,4,4-hexafluoro-2-butene (HFO-1336mzzE).

These two hydrofluoroolefins also have a very low greenhouse effect potential, namely the HFO-1336mzzZ has a GWP of 2 and the HFO-1336mzzE has a GWP of 18, and their toxicity levels are low enough to be applied safely in medium and high voltage electrical equipment. For example, for hydrofluoroolefin HFO-1336mzzZ the Workplace Exposure Limit (WEL- 8 hours), is 500 ppmv.

But furthermore, a particularly relevant advantage of hydrofluoroolefins of 4 carbon atoms and, in particular, of both hydrofluoroolefin HFO-1336mzzZ and HFO-1336mzzE is that they are non-flammable, that is, they have no flammability limits at normal operating temperatures of medium and high voltage electrical equipment, unlike hydrofluorolefins of 3 carbon atoms that do have flammability limits at such temperatures. Thus, for example, hydrofluoroolefin with 3 carbon atoms HFO-1234yf has a lower flammability limit of 6.2% (% vol in air) and an upper flammability limit of 12.3% (% vol in air) s/ASTM E681-01 at 21°C. Hydrofluoroolefin with 3 carbon atoms HFO-1234zeE has no flammability limits at 21°C but it does above 30 °C, so that for example at 60 °C the lower flammability limit is 5.7% (% vol in air) and the upper flammability limit is 11.3% (% vol in air) s/ASTM E681-01. This makes systems based on mixtures with hydrofluoroolefins of 3 carbon atoms, such as those mentioned above, unsafe under certain working conditions. For example, from the above data it follows that a mixture consisting of 10% C5K + 8% HFO-1234zeE + DRY AIR (i.e., with 9.75% HFO-1234zeE in air) would be flammable at 60°C, while the mixture with 10% C5K + 8% HFO-1336mzzZ + DRY AIR would not be flammable at 60°C.

Conversely, the use of hydrofluorolefins of 4 carbon atoms allows the mixed fluoroketone and hydrofluoroolefin system of the present invention to have a higher degree of safety than those already existing such as that disclosed in WO2013/041695.

The last element of the gaseous mixture of the electrical insulation system of the invention is/are **the carrier gas(es).** As carrier gases are known the gases used to dilute the fluoroketone(s) and hydrofluoroolefin(s) and, although having a lower dielectric strength, they allow the gaseous medium to behave as such at low temperatures. On the other hand, they are usually completely harmless (non-toxic) gases and generally with a reduced environmental impact. Carrier gases can be various such as N2, O2, dry air, helium or mixtures thereof. Particularly and preferably, in the system of the present invention, the carrier gases are selected from N2, O2, dry air or mixtures thereof.

A particular and preferred embodiment of the invention relates to an electrical isolation system wherein the gas mixture comprises a fluoroketone of 5 or 6 carbon atoms, more preferably fluoroketone C5K, one or more hydrofluoroolefins of 4 carbon atoms, and one or more carrier gases. In this embodiment preferably the carrier gases are selected from N2, O2, dry air or mixtures thereof.

The total dielectric strength of the gaseous mixture will be influenced by the amount of fluoroketone or fluoroketones and hydrofluoroolefin or hydrofluoroolefins of 4 carbon atoms, so that the more fluoroketone(s) and the more hydrofluoroolefin(s) in the gaseous mixture, the greater its dielectric strength.

However, the amount of fluoroketone and hydrofluoroolefin of 4 carbon atoms in the gas mixture is conditioned by the minimum operating temperature of the switchgear where it is to be used. Generally speaking, the lower the minimum operating temperature of the electrical switchgear, the less fluoroketones and hydrofluoroolefins of 4 carbon atoms can be placed in the gaseous mixture, since it is desirable to avoid their partial condensation at low temperatures.

The other fundamental element of the electrical insulation system of the invention, apart from the gaseous medium, is a molecular sieve with a pore size of 3 to 6 Å and a polar surface.

A molecular sieve as already pointed out above is a material containing small pores of a precise and uniform size that is used as an adsorbent for gases and liquids. Molecular sieves are capable of discriminating at the molecular size level so that molecules that are small enough to pass through the pores are adsorbed while larger molecules are not.

The use of the molecular sieve in the electrical insulation system of the invention is justified by the need to adsorb the water molecules present in the materials of some components forming the electrical switchgear, since the presence of such molecules negatively affects the dielectric strength and, therefore, the capacity as insulator of the gaseous mixture with fluoroketones and hydrofluoroolefins.

Molecular sieves have a high water adsorption capacity, that in some cases can reach up to 22% of their own weight in water. However, because the molecules of the carrier gases (N2, O2, dry air or helium) of the gaseous mixture of the insulation system have a molecular size similar to that of the water molecule, the molecular sieve must be capable of selectively separating the water molecules rather than those of these gases.

To this end, the inventors have discovered that the use of a molecular sieve with a pore size of 3 to 6 Å and a polar surface allows to make this discrimination and to selectively adsorb water molecules rather than N2, O2, dry air or helium molecules, resulting in the dielectric strength of the electrical insulation system of the invention not being altered or deteriorated.

This water-selective capacity of the sieves of the electrical insulation system of the invention comes not only from the pore size but also, and especially in the case of molecules of similar size to that of water, from the polar surface of the molecular sieves. The fact that the surface is polar, makes it more attractive to those molecules that are more polar rather than those that are less polar.

Table 1 describes both the size and polarity of certain molecules:

**Table 1.**

| Product | Molecule size, Angstroms | polarity |
| --- | --- | --- |
| Helium | 2.551 | 10.2 |
| Air | 3.711 | 78.6 |
| Carbon dioxide ($CO_2$) | 3.941 | 195.2 |
| Water ($H_2O$) | 2.641 | 809.1 |
| Nitrogen ($N_2$) | 3.798 | 71.4 |
| Oxygen ($O_2$) | 3.467 | 106.7 |
| Sulphur hexafluoride ($SF_6$) | 5.128 | 222.1 |
| Fluoroketone C5K | Approx. 9,000 | |
| Hydrofluoroolefin HFO-1336mzzZ | Approx. > 6,500 | |

From these data it is easy to understand that, for example, it will be easy to discriminate by size the adsorption of water molecules rather than molecules of e.g. SF6, fluoroketone or hydrofluoroolefin; however, it is not so much so compared to molecules of the carrier gases such as helium, O2, N2 or air, whose sizes are similar. Regarding these molecules, the much higher polarity of the water rather than that of the other carrier gases is relevant. This characteristic of water molecules is what causes them to be adsorbed preferably compared to the rest when the surface of the sieve is polar.

There are molecular sieves of different nature such as zeolites, which are aluminosilicates, porous glasses, clays, microporous carbons, activated carbons, etc. In principle, any molecular sieve is suitable for use in the electrical insulation system of the invention, as long as it complies with the pore size being between 3 to 6 Å and having a polar surface.

However, in a preferred embodiment of the invention, the molecular sieve has a pore size of 3 to 4 Å.

Also in a preferred embodiment, the molecular sieve is a zeolite sieve. The zeolite may be natural and preferably synthetic zeolite. Zeolites are aluminosilicates that may have different structures such as zeolite A, zeolite X, zeolite Y, etc.

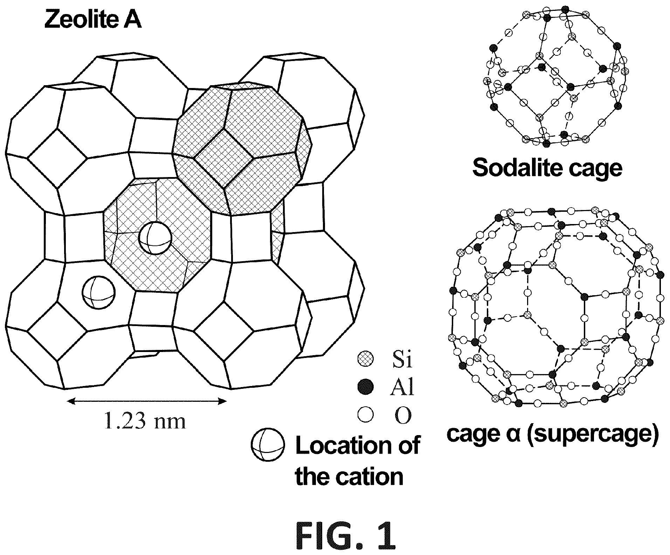

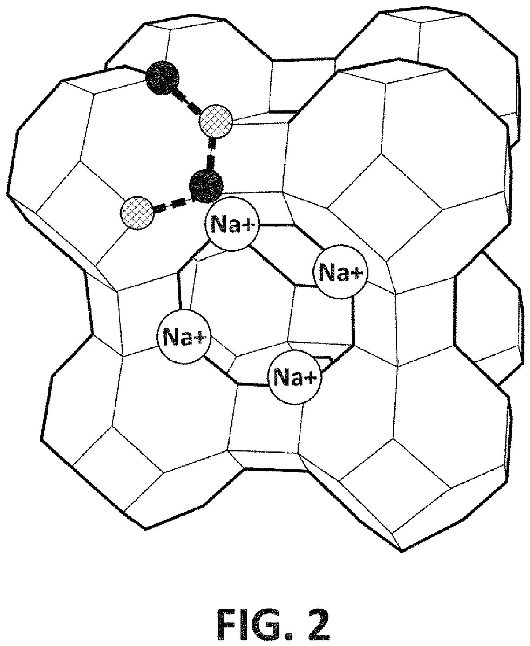

In the preferred embodiment of the invention, the zeolite has structure A. The structure of the Zeolite A can be seen in Figure 1. The aluminium, silicon and oxygen atoms are associated to form truncated octahedra called sodalite cages. Sodalite cages are combined in Zeolite A in the form of a single cube leaving an interior space called cage $\alpha$ with a cavity 11.5 Å in diameter accessible from the openings on the six sides of the cube. These inlets are surrounded by 8 oxygen atoms and one or more interchangeable cations partially block the front area. When the cations are Sodium (Na+) (see Figure 2), the ring of oxygen atoms provides a "window" of 4.2 Å diameter to enter the interior of the structure (cage a). Sodium cations may be partially substituted by other cations in synthetic zeolites such as, for example, potassium (K+) or calcium (Ca2+) resulting in openings of 3 Å and 5 Å respectively.

In addition to helping to determine the pore opening diameter, that is undoubtedly relevant in the molecular discrimination of the gases adsorbed by the Zeolites, they contribute to rigidly established positive and negative charges in the crystalline structure of the zeolite resulting in an uneven distribution of charges, which creates a polar surface. This characteristic of the zeolite is precisely that which allows water molecules to be adsorbed preferably rather than other molecules of carrier gases such as N2, O2, dry air or helium.

Another further object of the invention is represented by the use of an electrical insulation system such as that described above for electrical insulation and/or for the extinguishing of electric arcs in medium or high voltage electrical switchgear.

The gaseous medium comprising a mixture of one or more fluoroketones of 5 and 6 carbon atoms, one or more hydrofluoroolefins of 4 carbon atoms and one or more carrier gases provides a dielectric strength to the system that the molecular sieve with a pore size of 3 to 6 Å and a polar surface is responsible for maintaining, because it is capable of selectively adsorbing water molecules that may appear in the gaseous medium from some of the elements of the medium and high voltage electrical switchgear located in the closed and sealed enclosure of said switchgear. That is why the system of the invention is of great use in electrical insulation and is capable of extinguishing electric arcs in this type of electrical switchgear.

Another further object of the invention in some way related to the use of the electrical insulation system of the invention relates to a method for the electrical insulation and/or extinguishing of electric arcs in high and medium voltage electrical switchgear comprising the introduction of an electrical insulation system comprising:

   a) a gaseous medium consisting of a mixture of:

      i) one or more fluoroketones of between 5 and 6 carbon atoms;
      ii) one or more non-flammable hydrofluoroolefins of 4 carbon atoms; and
      iii) one, two or three carrier gases selected from N2, O2, dry air, helium or mixtures thereof;

   b) a molecular sieve having a pore size of 3 to 6 Å and a polar surface.

in a closed and sealed enclosure where the elements to be isolated from said medium or high voltage electrical switchgear are located.

For this purpose, one or more gas-permeable bags containing the molecular sieve are initially placed inside the enclosure. The enclosure is then closed so that it is perfectly sealed and it is vacuumed. The gaseous mixture with the fluoroketone(s), the hydrofluoroolefin(s) of 4 carbon atoms and the carrier gas(es) is then introduced until the desired pressure is reached.

A final object of the invention relates to medium or high voltage electrical switchgear comprising a closed enclosure containing live electrical components and an electrical insulation system comprising:

   a) a gaseous medium consisting of a mixture of:

      i) one or more fluoroketones of between 5 and 6 carbon atoms;
      ii) one or more non-flammable hydrofluoroolefins of 4 carbon atoms; and
      iii) one, two or three carrier gases selected from N2, O2, dry air, helium or mixtures thereof;

   b) a molecular sieve having a pore size of 3 to 6 Å and a polar surface.

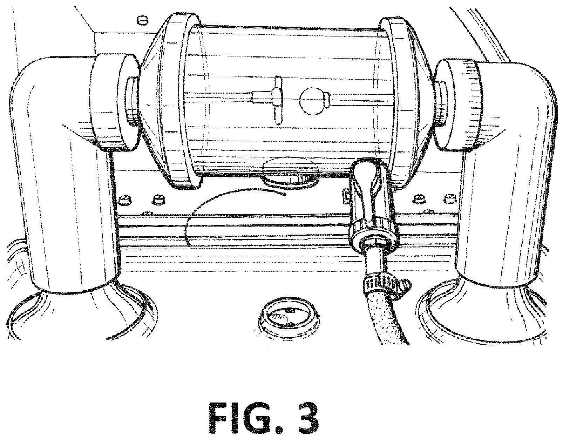

Figure 3 is a test system for the experimental determination of dielectric strength of gaseous insulation systems.

In a particular embodiment of the invention, such switchgear may be a secondary distribution cell for electrical distribution networks of up to 72 kV.

Below are examples that allow understanding the possible embodiments of the invention:

**Example 1: detailed exposition on embodiments of the invention**

As a preferred embodiment of this invention, an electrical insulation system is proposed within a closed and sealed enclosure that is part of a medium or high voltage electrical switchgear comprising a zeolitic molecular sieve with a size of between 3 and 6 Å, preferably between 3Å and 4Å, and further a gas mixture comprising:

a) a fully fluorinated fluoroketone with structural formula CF3-COCF- (CF3)2 (to be referred to as C5K); and

b) optionally also another fully fluorinated fluoroketone with structural formula CF3-CF2-CO-CF- (CF3)2 (to be referred to as C6K),

c) at least one hydrofluoroolefin of four carbon atoms such as, for example, HFO-1336mzzZ

d) and in addition to other carrier gas(es) such as, for example, N2, dry air, O2 or helium or any combination thereof.

The two fluoroketones mentioned are products with good dielectric strength, with very low greenhouse effect potential (GWP=1) and are also non-toxic. For example, for fluoroketone C5K the Workplace Exposure Limit (WEL- 8 hours) is 225 ppmv.

The presence in the gas mixture of a hydrofluoroolefin of 4 carbon atoms, such as HFO-1336mzzZ or HFO-1336mzzE, allows to substantially increase the dielectric strength of the mixture without negatively affecting other operating parameters.

The dielectric strength of the insulation system, in addition to being improved by the presence of the selective molecular sieve used due to the reduction of water therein, will also be influenced by the percentage of fluoroketone or fluoroketones and by the percentage of hydrofluoroolefin of 4 carbon atoms used in the gaseous mixture. So that the more fluoroketone and hydrofluoroolefin of 4 carbon atoms there is in the gaseous mixture, the greater will be its dielectric strength for a determined final filling pressure. However, as mentioned above, the amount of fluoroketone and hydrofluoroolefin of 4 carbon atoms in the gas mixture is conditioned by the minimum operating temperature of the switchgear if condensation at low temperatures is to be avoided (which would lead to a reduction in the dielectric properties of the gas mixture at these low temperatures).

The following two tables show the molar fraction values of fluoroketones C5K and C6K and hydrofluoroolefins HFO-1336mzzZ and HFO-1336mzzE that could be used in the gaseous mixture without condensation thereof for different minimum operating temperatures of the switchgear, assuming a filling temperature of the switchgear of 20 °C and with a total filling pressure of the mixture of 1400 mbars.

**Table 2. Mixtures with fluoroketone C5K**

| Temp (°C) | Pvs, C5K (bar) | P, C5K (bar) | X, C5K |
| --- | --- | --- | --- |
| -40 | 0.036 | 0.045 | 0.032 |
| -35 | 0.049 | 0.061 | 0.043 |
| -30 | 0.067 | 0.081 | 0.058 |
| -25 | 0.090 | 0.107 | 0.076 |
| -20 | 0.120 | 0.139 | 0.099 |
| -15 | 0.157 | 0.178 | 0.127 |
| -10 | 0.203 | 0.226 | 0.162 |
| -5 | 0.260 | 0.284 | 0.203 |
| 0 | 0.329 | 0.354 | 0.253 |

**Table 3. Mixtures with fluoroketone C6K**

| Temp. (°C) | Pvs, C6K (bar) | P, C6K (bar) | X, C6K |
| --- | --- | --- | --- |
| -40 | 0.015 | 0.018 | 0.0131 |
| -35 | 0.020 | 0.025 | 0.0177 |
| -30 | 0.027 | 0.033 | 0.0235 |
| -25 | 0.037 | 0.043 | 0.0309 |
| -20 | 0.049 | 0.056 | 0.0401 |
| -15 | 0.064 | 0.072 | 0.0516 |
| -10 | 0.083 | 0.092 | 0.0657 |
| -5 | 0.106 | 0.116 | 0.0829 |

(continued)

| Temp. (°C) | Pvs, C6K (bar) | P, C6K (bar) | X, C6K |
|---|---|---|---|
| 0 | 0.135 | 0.145 | 0.1037 |

**Table 4. Mixtures with HFO-1336mzzZ**

| Temp. (°C) | Pvs, HFOZ (bar) | P, HFOZ (bar) | X, HFOZ |
|---|---|---|---|
| -40 | 0.023 | 0.029 | 0.0211 |
| -35 | 0.033 | 0.041 | 0.0292 |
| -30 | 0.046 | 0.056 | 0.0398 |
| -25 | 0.063 | 0.075 | 0.0534 |
| -20 | 0.085 | 0.099 | 0.0706 |
| -15 | 0.114 | 0.129 | 0.0921 |
| -10 | 0.149 | 0.166 | 0.1186 |
| -5 | 0.193 | 0.211 | 0.1508 |
| 0 | 0.247 | 0.266 | 0.1897 |

**Table 5. Mixtures with HFO-1336mzzE**

| Temp. (°C) | Pvs, HFOE (bar) | P, HFOE (bar) | X, HFOE |
|---|---|---|---|
| -30 | 0.162 | 0.195 | 0.1395 |
| -20 | 0.290 | 0.336 | 0.2399 |
| -10 | 0.490 | 0.546 | 0.3899 |
| 0 | 0.740 | 0.794 | 0.5673 |

wherein:

**Pvs, C5k** and **Pvs, C6K, Pvs, HFOZ** and **Pvs, HFOE** are the saturation vapour pressures of fluoroketones C5K and C6K and hydrofluoroolefins HFO-1336mzzZ and HFO-1336mzzE at different temperature values,

**P, C5K** and **P, C6K** and **P, HFOZ** and **P, HFOE** are the pressure values of the fluoroketones C5K and C6K and the hydrofluoroolefins HFO-1336mzzZ and HFO-1336mzzE in the switchgear at the filling temperature of 20 °C (P, C5K = Pvs, C5K x 293.15/Tmin(K))

**X, C5K** and **X, C6K** and **X, HFOZ** and **X, HFOE** are the molar fractions of the fluoroketones C5K and C6K and the hydrofluoroolefins HFO-1336mzzZ and HFO-1336mzzE in the final mixture (for a final filling pressure of 1400 mbars) which could be used without condensation even at the minimum operating temperature of the switchgear.

For example, for a medium voltage switchgear with a filling pressure at 20 °C of 1.40 bar and a minimum operating temperature of -10 °C, the following could be used:

a) a mixture of N2 (or dry air or O2 or helium or a mixture thereof) with 16.2% C5K
b) or a mixture of N2 (or dry air or O2 or helium or a mixture thereof) with 6.57% C6K,
c) or a mixture of N2 (or dry air or O2 or helium or a mixture thereof) with 11.86% HFO-1336mzzZ,
d) or a mixture of N2 (or dry air or O2 or helium or a mixture thereof) with 38.99% 1336mzE,
e) or a mixture of N2 (or dry air or O2 or helium or a mixture thereof) with 16.2% C5K and 11.86% HFO-1336mzzZ,

without condensation of fluoroketones or hydrofluoroolefins up to -10°C.
Below this temperature of -10 °C, fluoroketones and hydrofluoroolefins would begin to condense partially, reducing their percentage in the gaseous mixture and thus decreasing the dielectric strength of the initial insulation system.

Likewise, for a medium voltage switchgear with a filling pressure at 20 °C of 1.40 bar and a minimum operating temperature of -20 °C, the following could be used:

a) a mixture of N2 (or dry air or O2 or helium or a mixture thereof) with 9.9 % C5K

b) or a mixture of N2 (or dry air or O2 or helium or a mixture thereof) with 4,01 % C6K,

c) or a mixture of N2 (or dry air or O2 or helium or a mixture thereof) with 7.06% HFO-1336mzzZ,

d) or a mixture of N2 (or dry air or O2 or helium or a mixture thereof) with 23.99% 1336mzE

e) or a mixture of N2 (or dry air or O2 or helium or a mixture thereof) with 9.9% C5K and 7.06% HFO-1336mzzZ,

without condensation of fluoroketones or hydrofluoroolefins up to -20 °C.

Below this temperature of -20 °C, fluoroketones and hydrofluoroolefins would begin to condense partially, reducing their percentage in the gaseous mixture and thus decreasing the dielectric strength of the initial insulation system.

And so on for other minimum operating temperatures of the switchgear.

If the final pressures of the mixture in the switchgear were different from 1.40 bar, the percentages of C5K and C6K, HFO-1336mzzZ and HFO-1336mzzE would also be modified accordingly and according to the following formula:

$$X,C5K \ = \ P,C5K \ / \ Ptotal \ mixture$$

$$X,C6K \ = \ P,C6K \ / \ Ptotal \ mixture$$

$$X,HFOZ \ \ = \ P,HFOZ \ / \ Ptotal \ mixture$$

$$X,HFOE \ \ = \ P,HFOE \ / \ Ptotal \ mixture$$

where Ptotal mixture is the final pressure of the mixture. If higher percentages of fluoroketones and hydrofluoroolefins are used in mixtures than those indicated for each temperature at the time of filling of the switchgear, the dielectric strength will logically be higher, but it should be taken into account that at the minimum operating temperatures the dielectric strength of the isolation system would be reduced and would be lower than if the percentages of fluoroketone and hydrofluoroolefins indicated in Tables 2, 3, 4 and 5 had been used for each temperature, due to the condensation of part of the fluoroketone or fluoroketones and/or hydrofluoroolefin or hydrofluoroolefins.

**Example 2: Dielectric strength test of gaseous mixtures**

The dielectric strength of different gaseous mixtures was evaluated by measuring the "electrical breakdown voltage" in BAUR DTA-100E equipment having a gas test cell with two electrodes according to standard ASTM D2477 (one of the 5 electrodes is a 38.1 mm (1.5 inch) diameter flat face disc and the other electrode is a 19.05 mm (0.75 inch) diameter spherical ball) and with an electrode spacing of 8 mm.

The gaseous mixtures tested were as follows:

a) 1400 mbars of dry air

b) 1400 mbars of mixture of dry air + 9% C5K

c) 1400 mbars of mixture of dry air + 9% C5K + 8% HFO-1336mzzZ

The results of these tests are shown in Table 5:

**Table 5: Electrical breakdown voltage values of gaseous mixtures**

| GAS or MIXTURE | Dielectric rupture voltage, kV |
|---|---|
| Dry air | 22.8 |
| Dry air + 9% C5K | 37.5 |
| Dry air + 9% C5K + 8% HFO-1336mzzZ | 42.0 |

As can be seen in the last entry of Table 5, the addition of 8% HFO-1336mzzZ hydrofluoroolefin to the dry air fluoroketone mixture provides a further increase in the electrical breakdown voltage of said mixture of about 12%, which makes such a gaseous mixture even more suitable for electrical insulation applications in medium or high voltage electrical switchgear.

**Example 3: Environmental impact (greenhouse effect) of an example gaseous mixture**

The global warming potential (GWP) of a gaseous mixture is calculated, in accordance with the European Regulation on fluorinated greenhouse gases, as the weighted average derived from the sum of the weight fractions of each substance multiplied by its GWP value.
Thus:

a) the greenhouse effect potential (GWP) of a mixture with 9% fluoroketone C5K, 6% HFO-1336mzzE and 85% dry air would be 3.44, i.e. 0.0151% of the greenhouse effect potential (GWP) of SF6 gas which is 22800 (taking into account that the GWP of C5K is 1 and that of HFO-1336mzzE is 18, and that the molecular weight of C5K is 266, that of HFO-1336mzzE is 164 and that of dry air is 29).
b) the greenhouse effect potential (GWP) of a mixture with 9% fluoroketone C5K, 6% HFO-1336mzzZ and 85% dry air would be 0.75, i.e. 0.0033% of the greenhouse effect potential (GWP) of SF6 gas which is 22800 (taking into account that the GWP of C5K is 1 and that of HFO-1336mzzZ is 2, and that the molecular weight of C5K is 266, that of HFO-1336mzzZ is 164 and that of dry air is 29).

**Claims**

1.    A low environmental impact electrical insulation system for medium or high voltage electrical switchgear comprising:

a) a gaseous medium consisting of a mixture of:

i) one or more fluoroketones of between 5 and 6 carbon atoms;
ii) one or more non-flammable hydrofluoroolefins of 4 carbon atoms; and
iii) one, two or three carrier gases selected from N2, O2, dry air, helium or mixtures thereof;

b) a molecular sieve having a pore size of 3 to 6 Å and a polar surface.

2.    The system according to claim 1 wherein the gas medium comprises a fluoroketone of 5 carbons one or more hydrofluoroolefins of 4 carbon atoms and one or more carrier gases selected from N2, O2, dry air, helium or mixtures thereof.

3.    The system according to claim 1 or 2 wherein the fluoroketone is (CF3)2-CF-CO-CF3 and the 4-carbon atoms hydrofluoroolefins are HFO-1336mzzZ or HFO-1336mzzE.

4.    The system according to any one of the preceding claims wherein the carrier gases are selected from dry air, $N_2$, and O2.

5.    The system according to claim 1 wherein the molar fraction of the one or more fluoroketones of 5 to 6 carbon atoms and the one or more hydrofluoroolefins of 4 carbon atoms is at least 1% or at least 2% or at least 5% or at least 10% or at least 15%.

6.    The system according to any one of the preceding claims wherein the molecular sieve has a pore size of 3 to 4 Å.

7.    The system according to any one of the preceding claims wherein the molecular sieve is selected from natural zeolites or synthetic zeolites.

8.    The system according to claim 7 wherein the zeolite has a structure A.

9.    A use of an electrical insulation system according to any of the preceding claims for electrical insulation and/or for the extinction of electric arcs in medium or high voltage electrical switchgear.

10. A method for the electrical insulation and/or extinguishing of electric arcs in high and medium voltage electrical switchgear comprising introducing the electrical insulation system according to any one of claims 1 to 8 into a closed and sealed enclosure where the elements from said medium or high voltage electrical switchgear to be isolated are located.

11. A medium or high voltage electrical switchgear comprising a closed enclosure containing live electrical components and an electrical insulation system according to any one of claims 1 to 8.

12. The electrical switchgear according to claim 11 wherein the switchgear may be an electrical power distribution switchgear in networks up to 72 kV.


**Patentansprüche**

1. Ein elektrisches Isolierungssystem mit geringer Umweltauswirkung für elektrische Mittel- oder Hochspannungsschaltgeräte, das Folgendes umfasst:

   a) ein gasförmiges Medium, bestehend aus einer Mischung aus:

   i) einem oder mehreren Fluorketonen mit zwischen 5 und 6 Kohlenstoffatomen;
   ii) einem oder mehreren nicht entflammbaren Hydrofluorolefinen mit 4 Kohlenstoffatomen; und
   iii) einem, zwei oder drei Trägergasen, ausgewählt aus N2, O2, trockener Luft, Helium oder deren Mischungen;

   b) ein Molekularsieb mit einer Porengröße von 3 bis 6 Å und einer polaren Oberfläche.

2. System nach Anspruch 1, wobei das Gasmedium ein Fluorketon mit 5 Kohlenstoffatomen, ein oder mehrere Hydrofluorolefine mit 4 Kohlenstoffatomen und ein oder mehrere Trägergase, ausgewählt aus N2, O2, trockener Luft, Helium oder Gemischen davon, umfasst.

3. System nach Anspruch 1 oder 2, wobei das Fluorketon (CF3)2-CF-CO-CF3 ist und die Hydrofluorolefine mit 4 Kohlenstoffatomen HFO-1336mzzZ oder HFO-1336mzzE sind.

4. System nach einem der vorhergehenden Ansprüche, wobei die Trägergase aus trockener Luft, N2 und O2 ausgewählt sind.

5. System nach Anspruch 1, bei dem der molare Anteil des einen oder der mehreren Fluorketone mit 5 bis 6 Kohlenstoffatomen und des einen oder der mehreren Hydrofluorolefine mit 4 Kohlenstoffatomen mindestens 1% oder mindestens 2% oder mindestens 5% oder mindestens 10% oder mindestens 15% beträgt.

6. Das System nach einem der vorhergehenden Ansprüche, wobei das Molekularsieb eine Porengröße von 3 bis 4 Å aufweist.

7. Das System nach einem der vorhergehenden Ansprüche, wobei das Molekularsieb aus natürlichen Zeolithen oder synthetischen Zeolithen ausgewählt ist.

8. System nach Anspruch 7, wobei der Zeolith eine Struktur A aufweist.

9. Verwendung eines elektrischen Isolierungssystems nach einem der vorhergehenden Ansprüche zur elektrischen Isolierung und/oder zur Löschung von Lichtbögen in elektrischen Mittel- oder Hochspannungsschaltgeräten.

10. Verfahren zur elektrischen Isolierung und/oder zum Löschen elektrischer Lichtbögen in elektrischen Hoch- und Mittelspannungsschaltgeräten, bei dem das elektrische Isolierungssystem nach einem der Ansprüche 1 bis 8 in ein geschlossenes und abgedichtetes Gehäuse eingebracht wird, in dem sich die zu isolierenden Elemente des elektrischen Mittel- oder Hochspannungsschaltgerätes befinden.

11. Elektrisches Mittel- oder Hochspannungsschaltgerät mit einem geschlossenen Gehäuse, das stromführende elektrische Komponenten und ein elektrisches Isolierungssystem nach einem der Ansprüche 1 bis 8 enthält.

**12.** Elektrisches Schaltgerät nach Anspruch 11, wobei es sich bei dem Schaltgerät um ein elektrisches Energieverteilungsschaltgerät in Netzen bis zu 72 kV handeln kann.

**Revendications**

1. Système d'isolation électrique à faible impact environnemental pour appareil de commutation électrique moyenne et haute tension comprenant :

   a) un milieu gazeux constitué d'un mélange de :

      i) une ou plusieurs fluorocétones d'entre 5 et 6 atomes de carbone ;
      ii) une ou plusieurs hydrofluorooléfines non inflammables de 4 atomes de carbone ; et
      iii) un, deux ou trois gaz porteurs choisis parmi $N_2$, $O_2$, l'air sec, l'hélium ou leurs mélanges ;

   b) un tamis moléculaire ayant une taille de pore de 3 à 6 Å et une surface polaire.

2. Système selon la revendication 1 dans lequel le milieu gazeux comprend une fluorocétone de 5 atomes de carbone, une ou plusieurs hydrofluorooléfines de 4 atomes de carbone et un ou plusieurs gaz porteurs choisis parmi $N_2$, $O_2$, l'air sec, l'hélium ou leurs mélanges.

3. Système selon la revendication 1 ou 2 dans lequel la fluorocétone est $(CF_3)_2$-CF-CO-$CF_3$ et les hydrofluorooléfines de 4 atomes de carbone sont HFO-1336mzzZ ou HFO-1336mzzE.

4. Système selon l'une quelconque des revendications précédentes dans lequel les gaz porteurs sont choisis parmi l'air sec, $N_2$ et $O_2$.

5. Système selon la revendication 1 dans lequel la fraction molaire des une ou plusieurs fluorocétones de 5 à 6 atomes de carbone et des une ou plusieurs hydrofluorooléfines de 4 atomes de carbone est d'au moins 1 % ou d'au moins 2 % ou d'au moins 5 % ou d'au moins 10 % ou d'au moins 15 %.

6. Système selon l'une quelconque des revendications précédentes dans lequel le tamis moléculaire a une taille de pore de 3 à 4 Å.

7. Système selon l'une quelconque des revendications précédentes dans lequel le tamis moléculaire est choisi parmi les zéolites naturelles ou les zéolites synthétiques.

8. Système selon la revendication 7 dans lequel la zéolite a une structure A.

9. Utilisation d'un système d'isolation électrique selon l'une quelconque des revendications précédentes pour l'isolation électrique et/ou pour l'extinction d'arcs électriques dans un appareil de commutation électrique moyenne ou haute tension.

10. Procédé pour l'isolation électrique et/ou l'extinction d'arcs électriques dans un appareil de commutation électrique haute et moyenne tension comprenant l'introduction du système d'isolation électrique selon l'une quelconque des revendications 1 à 8 dans une enceinte fermée et étanche où sont situés les éléments dont doit être isolé ledit appareil de commutation électrique moyenne ou haute tension.

11. Appareil de commutation électrique moyenne ou haute tension comprenant une enceinte fermée contenant des composants électriques sous tension et un système d'isolation électrique selon l'une quelconque des revendications 1 à 8.

12. Appareil de commutation électrique selon la revendication 11 dans lequel l'appareil de commutation peut être un appareil de commutation de distribution d'énergie électrique dans des réseaux jusqu'à 72 kV.

Zeolite A

1.23 nm

Sodalite cage

cage α (supercage)

Si
Al
O
Location of the cation

FIG. 1

EP 3 671 764 B1

# FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20101460022 A
- WO 2010142346 A
- WO 2012160158 A
- WO 2012160155 A
- US 2015214701 A1
- US 2018247779 A1
- WO 2016116637 A
- WO 2013041695 A